# EUROPÄISCHE PATENTSCHRIFT

(11) **EP 1 085 238 B1**
(45) Veröffentlichungstag und Bekanntmachung des Hinweises auf die Patenterteilung: **13.07.2005**
(21) Anmeldenummer: 00119149.3
(22) Anmeldetag: 05.09.2000
(51) Int. Cl.: F16H 25/18, G06K 7/00

(54) **Getriebe zur Übertragung von senkrecht aufeinander stehenden Bewegungen**
Transmission for conveying perpendicular movements
Transmission pour convertir des mouvements perpendiculaires

(30) Priorität: 16.09.1999 DE 29916314 U
(43) Veröffentlichungstag der Anmeldung: 21.03.2001
(73) Patentinhaber: SIEMENS AKTIENGESELLSCHAFT, 80333 München (DE)
(72) Erfinder: Burkart, Harald, Dipl.-Ing., 78054 Villingen-Schwenningen (DE)

(56) Entgegenhaltungen:
- ROTH: "Konstruieren mit Konstruktionskatalogen" 1982 , SPRINGER-VERLAG , BERLIN XP002246536 * Seite 56; Tabelle 3.21 *
- PATENT ABSTRACTS OF JAPAN vol. 013, no. 133 (M-809), 4. April 1989 (1989-04-04) & JP 63 300836 A (MITSUBISHI METAL CORP), 8. Dezember 1988 (1988-12-08)

## Beschreibung

Die Erfindung betrifft ein Schubgetriebe mit einem ersten, mit einem Motor in getrieblicher Verbindung stehenden Schubglied und einem zweiten Schubglied, an welchem eine variable Last angreift und welches mit dem ersten Schubglied in keilgetrieblicher Verbindung steht.

Ein Getriebe mit den Merkmalen des Oberbegriff des unabhängigen Anspruchs 1 ist bekannt aus "konstruieren mit Konstruktronskatalogen", 1982 Roth , Springer Verlag, Berlin, siehe insbesondere Seite 56, Tabelle 3.21.

Schubgetriebe sind im allgemeinen dort zweckdienlich anwendbar, wo gegebenenfalls aus räumlichen aber auch aus funktionellen Gründen eine unmittelbare und geradlinige Kraftflußumlenkung wünschenswert ist. Schubgetriebe bieten außerdem die Funktion einer Weguntersetzung/Kraftübersetzung, insbesondere jedoch den Vorzug der Unterbrechbarkeit der getrieblichen Verbindung, indem nach einer Verschiebebewegung des getriebenen Schubgliedes und dessen Verriegelung, beispielsweise in Verbindung mit einer Sprungfunktion, das treibende Schubglied in seine Ausgangsposition zurückgeführt werden kann.

Ein typischer Anwendungsfall stellt beispielsweise ein Datenkartenaggregat dar, bei dem ein sich bezogen auf eine Datenkarte in einer Lese-/Schreibposition befindlicher Datenkartenträger, wenn die Datenkarte entnommen werden soll, gegen die Wirkung einer Feder in eine Entnahmeposition verschoben werden muß und in dieser Position eine Verriegelung des Datenkartenträgers erfolgt. Beim Eingeben einer Datenkarte wird bei einem derartigen Konzept der Datenkartenträger entriegelt und mittels der Feder in die Lese-/Schreibposition geführt, das heißt, er liegt in der Lese-/Schreibposition unter der Wirkung der Feder an einem Anschlag an.

Wird das betreffende Datenkartenaggregat beispielsweise in einem Nutzfahrzeug eingesetzt so ist es, um eine exakte Positionierung beziehungsweise Kontaktierung einer eingegebenen Datenkarte sicherzustellen und die Gefahr von Lageänderungen aufgrund betriebsbedingter Erschütterungen auszuschließen, erforderlich, daß der Datenkartenträger in der Lese-/Schreibposition unter einer relativ großen Anschlagkraft steht. Das heißt, der den Datenkartenträger mittels des Schubgetriebes bewegende Motor ist mit einer relativ hohen Anfangslast und einer zusätzlichen mit dem Verschieben des Datenkartenträgers zunehmenden Transportlast beaufschlagt. Hinzu kommt, daß das Ausgeben einer Datenkarte in einer relativ kurzen Zeit erfolgen sollte, so daß ein entsprechend leistungsfähiger Motor eingesetzt werden muß. Die dadurch bedingten hohen Kosten sind jedoch, insbesondere wenn es sich um den Armaturenbereich eines Fahrzeuges handelt, nicht akzeptierbar, das heißt, bezüglich des Drehmoments geeignete Motoren sind nicht verwendbar. Außerdem steht infolge verschiedener Spannungsabfälle nicht die volle Spannung der Fahrzeugbatterie zur Verfügung und die Stromaufnahme ist aus Sicherheitsgründen und durch gesetzliche Vorschriften begrenzt.

Selbstverständlich läßt sich die Drehmomentforderung an den Motor dadurch reduzieren, daß zwischen dem Motor und dem treibenden Schubglied eine hohe getriebliche Untersetzung vorgesehen und/oder der Keilwinkel des Schubgetriebes relativ flach ausgebildet wird. In beiden Fällen ist die Wartezeit für die Ausgabe von Datenkarten unzumutbar. Hinzu kommt ein größerer Raumbedarf und erhöhte Kosten durch die Getriebeerweiterung.

Aufgabe der vorliegenden Erfindung war es somit, in einer ein Schubgetriebe umfassenden und mit einer variablen Last beaufschlagten getrieblichen Verbindung auch bei eingeschränkter Antriebsleistung und seriengerechtem getrieblichen Aufwand eine ausreichend kurze Betätigung des getriebenen Schubgliedes zu erzielen.

Die Lösung der Aufgabe sieht vor, daß die keilgetriebliche Verbindung derart ausgebildet ist, daß in Bezug auf die variable Last der Motor mit einem nichtproportionalen Drehmoment beaufschlagt ist.

Ein bevorzugtes Ausführungsbeispiel ist dadurch gekennzeichnet, daß die getrieblich zusammenwirkenden Keilflächen der Schubglieder in Schubrichtung gekrümmt ausgebildet sind.

Weitere vorteilhafte Ausbildungen der Erfindung gehen aus den Unteransprüchen hervor.

Der Vorteil, den die Erfindung durch Vorsehen eines veränderlichen Keilwinkels zwischen den Schubgliedern bietet, ist insbesondere darin zu sehen, daß die gestellte Aufgabe ohne zusätzlichen technischen Aufwand, das heißt ohne zusätzliche Bauteile gelöst wird und für den Drehmomentbedarf des treibenden Motors im wesentlichen nur noch die Grund- beziehungsweise Anfangslast in Betracht zu ziehen ist. Durch geeignete Kurvenformen der zusammenwirkenden Keilflächen läßt sich auch bei einem nichtlinearen Lastanstieg ein Drehmomentausgleich, gegebenenfalls ein konstanter Drehmomentbedarf für den treibenden Motor schaffen. Die gefundene Lösung ist verständlicherweise auch für einen solchen Fall einsetzbar, bei dem eine konstante Last mit unterschiedlicher Geschwindigkeit bewegt werden und dabei der Drehmomentbedarf des treibenden Motors im wesentlichen konstant gehalten werden soll.

Von den Zeichnungen zeigen:
- Figur 1: eine Funktionsskizze des erfindungsgemäßen Schubgetriebes,
- Figur 2: eine Übersichtsdarstellung eines Datenkartenaggregates mit gemäß der Erfindung ausgebildeten Transportmitteln, wobei sich das Datenkartenaggregat im Lese-/Schreibzustand befindet,
- Figur 3: eine mit Freischnitten versehene Draufsicht auf das Datenkartenaggregat, welche, im Gegensatz zu Figur 2, das Datenkartenaggregat in einem Eingabezustand zeigt.

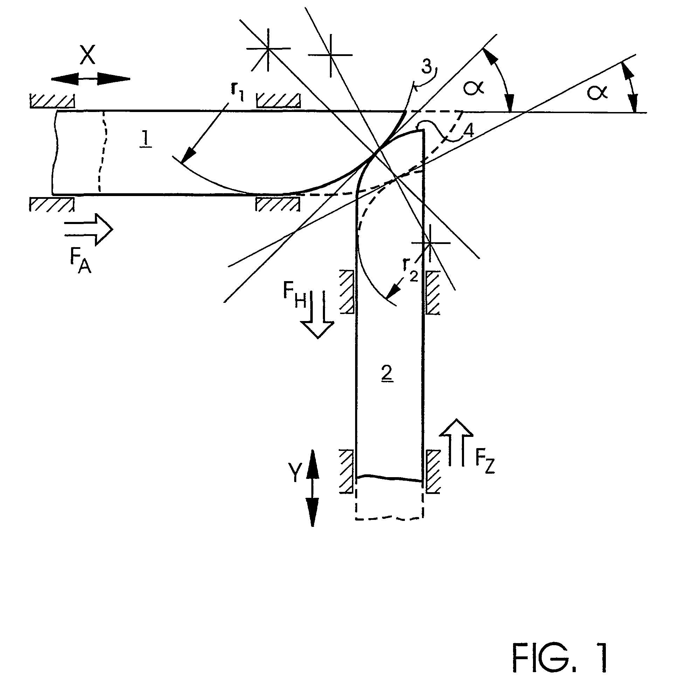

Wie aus der Funktionsskizze, Figur 1, ersichtlich ist, steht ein in den Pfeilrichtungen X verschiebbar gelagertes Schubglied 1 mit einem in den Pfeilrichtungen Y verschiebbar gelagerten Schubglied 2 in keilgetrieblicher Verbindung. Mit F_{A} ist die am Schubglied 1 wirksame Antriebskraft bezeichnet. Die aus der keilgetrieblichen Verbindung von Schubglied 1 und Schubglied 2 resultierende Hubkraft F_{H} wirkt entgegen einer sich wegabhängig verändernden Kraft F_{Z} einer an dem Schubglied 2 angreifenden Zugfeder. Eine Angleichung derart, daß F_{A} und somit der Drehmomentbedarf des treibenden Motors im wesentlichen konstant bleibt, erfolgt dadurch, daß die getrieblich in Wirkverbindung stehenden Keilflächen 3 und 4 der Schubglieder 1 und 2 gekrümmt ausgebildet sind. Im einfachsten Falle können für die Krümmungen Kreisbögen zugrunde gelegt werden, wobei die Länge der vorgesehenen Radien r₁ und r₂ und die Lagen der jeweiligen nicht bezeichneten Mittelpunkte innerhalb gewisser Grenzen frei wählbar sind, aber auch rechnerisch für den angestrebten Zweck einer variablen Drehmomententlastung des treibenden Motors optimiert werden können. Wesentlich ist, daß, wie Figur 1 zeigt, der Keilwinkel veränderlich ist und sich beispielsweise von 45° in der Anfangsstellung auf 20° in der End- bzw. Raststellung des getriebenen Bauteils verringert. Bei dem nachfolgend beschriebenen Ausführungsbeispiel stellt dieses Bauteil einen Schlitten dar, welcher als Datenkartenträger ausgebildet ist.

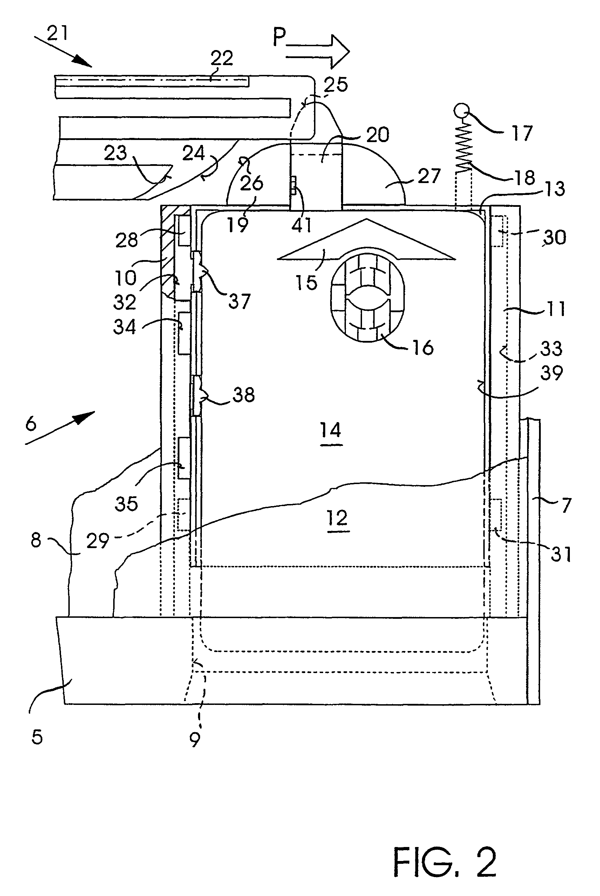

Die Übersichtsdarstellung, Figur 2, zeigt mit 5 eine Frontwand eines Gehäuses, beispielsweise eines Fahrtschreibers, in dem ein Datenkartenaggregat 6 angeordnet ist. Mit 7 soll eine Seitenwand und mit 8 ein Boden des betreffenden Gehäuses bezeichnet sein. In der Frontwand 5, in welcher in der Regel wenigstens verschiedene Tasten - eine dient der Erzeugung eines Datenkarten-Ausgabesignals - und ein LC-Display angeordnet, jedoch, weil nicht erfindungswesentlich, nicht dargestellt sind, ist ein Schlitz 9 vorgesehen, der als frontseitiger Zugang zu dem Datenkartenaggregat 6 dient. Letzteres umfaßt zwei Führungswangen 10 und 11, welche an einer Leiterplatte 12 des Gerätes in geeigneter Weise befestigt oder unmittelbar angeformt sind sowie einen in den Führungswangen 10, 11 verschiebbar gelagerten Schlitten 13, welcher als Datenkartenträger ausgebildet ist. Die Figur 2 zeigt ferner eine mit 14 bezeichnete Datenkarte, die mit einem Hinweispfeil 15 für die richtige Eingabelage und Eingaberichtung sowie mit einem Kontaktareal 16 versehen ist. Ein der Datenkarte 14 zugeordneter Kontaktsatz ist an der Leiterplatte 12 befestigt, jedoch durch das Freischneiden der Leiterplatte 12 in Figur 2 nicht sichtbar. An einem ortsfest angebrachten Stift 17 beziehungsweise einem anderen geeigneten Element ist das eine Ende einer Zugfeder 18 eingehängt, die den Transport des Schlittens 13 in die in der Figur 2 dargestellte Lese-/Schreibposition bewirkt. In dieser Position ragen der Schlitten 13, das heißt ein an dem Schlitten 13 angeformter Lappen 19 und ein auf dem Schlitten 13 verschiebbar gelagerter Schieber 20 in den Bewegungsweg eines quer zum Schlitten 13 geführten Schubgliedes 21 hinein. Das in geeigneter Weise gelagerte Schubglied 21 weist eine Verzahnung 22 auf, über die es unter Zwischenschaltung einer nicht dargestellten Getriebekette mit einem treibenden Motor in Verbindung steht. Mit 23 und 24 sind zwei an dem Schubglied 21 gekrümmt ausgebildete Keilflächen bezeichnet. Mit diesen wirken, wenn das Schubglied 21 in Richtung des Schlittens 13 bewegt wird, am Lappen 19 und am Schieber 20 ausgeformte Keilflächen 25 und 26 zusammen. Ein symmetrisch zum Lappen 19 am Schlitten 13 ausgebildeter Lappen 27 ermöglicht den Einbau des Datenkartenaggregates 6 derart, daß der Schlitten 21 auch von der entgegengesetzten Richtung, wie in Figur 2 dargestellt, angesteuert werden kann.

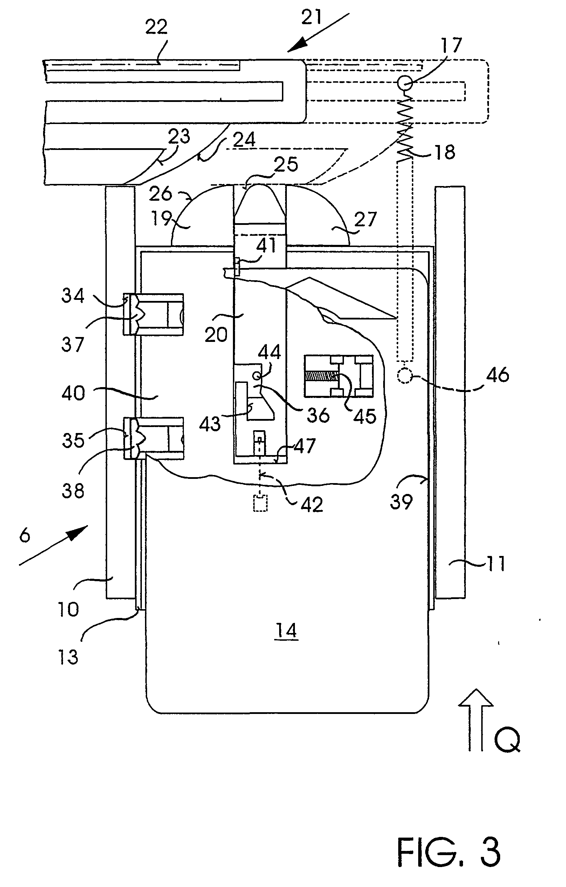

Der Vollständigkeit halber sei noch erwähnt, daß an dem Schlitten 13 Führungsstege 28, 29, 30 und 31 angeformt sind, die in in den Führungswangen 10, 11 ausgebildete Nute 32 und 33 eingreifen. Dabei sind die Nute 32, 33 in den Führungswangen 10, 11 nicht durchgehend ausgebildet, so daß dem unter der Wirkung der Zugfeder 18 stehenden Schlitten 13 mit den Führungswangen 10, 11 ein Anschlag zugeordnet ist. Mit 34 und 35 sind in der Führungswange 10 vorgesehene Freisparungen bezeichnet, welche der Verriegelung des Schlittens 13 in der Eingabe-/Entnahmeposition dienen indem sie mit an einem zweiten am Schlitten 13 gelagerten Schieber 36 (Figur 3) ausgebildeten Fingern 37 und 38 zusammenwirken.

In der in der Figur 2 dargestellten Funktionsstellung, bei der sich die Datenkarte 14 in der Lese-/Schreibposition befindet, greifen die Finger 37, 38 seitlich an der Datenkarte 14 an und halten diese an der gegenüberliegenden Wand einer im Schlitten 13 ausgebildeten, den Datenkarten 14 zugeordneten Fassung 39 fest. In diesem Falle sind die Schieber 20 und 36 derart ausgebildet und an dem Schlitten 13 mittels H-förmiger Prismenführungen derart gelagert, daß sie mit der Fläche 40 (Figur 3) der Fassung 39 des Schlittens 13 bündig abschließen. Lediglich eine an dem Schieber 20 ausgebildete Nase 41 greift in die Fassung 39, die randlich, parallel zur Fläche 40 ausgebildete, jedoch nicht dargestellte Niederhalter aufweist, ein, wenn sich der Schlitten 13 in der Eingabe-/Entnahmeposition befindet, bei der die Finger 37, 38 des T-förmig ausgebildeten Schiebers 36 in Wirkverbindung mit den Freisparungen 34, 35 stehen. Das heißt, beim Eingeben einer Datenkarte 14 in das Datenkartenaggregat 6 wird über die Nase 41 der Schieber 20 entgegen der Wirkung einer Zugfeder 42 verschoben und dabei ein zwischen dem Schieber 20 und dem Schieber 36 vorgesehenes, zwei stabile Stellungen der Schieber 20, 36 bewirkendes Kippsprungwerk ausgelöst. Letzteres besteht aus einer in dem Schieber 20 ausgebildeten, mit einem Kippunkt versehenen Kulisse 43, einem am Schieber 36 befestigten und mit der Kulisse 43 keilgetrieblich in Wirkverbindung stehendem Stift 44 sowie einer Druckfeder 45, die einerseits an dem Schieber 36 angreift und sich andererseits an dem Schlitten 13 abstützt. Dabei sei hervorgehoben, daß die Kraft der Druckfeder 45 erheblich größer gewählt ist als diejenige der Zugfeder 42.

Wird beim Eingeben einer Datenkarte 14 in Pfeilrichtung Q der Kippunkt des Kippsprungwerkes überschritten, erfolgt unter der Wirkung der Druckfeder 45 ein Entriegeln des Schlittens 13 bei gleichzeitigem seitlichem Greifen der Datenkarte 14 und unter der Wirkung der Zugfeder 18, deren eines Ende an einem schlittenfesten Pföstchen 46 eingehängt ist, ein Transport des Schlittens 13 in die Lese-/Schreibposition. Im umgekehrten Fall, das heißt, beim Ausgeben einer Datenkarte 14, was beispielsweise durch eine Tastenbetätigung ausgelöst werden muß, wird das Schubglied 21 in Pfeilrichtung P motorisch verstellt und dabei zunächst der Schlitten 13, indem die Keilflächen 24 und 26 in Gleitverbindung treten, in eine Position verschoben, bei der die Finger 37, 38 den Freisparungen 34, 35 gegenüberstehen. Beim weiteren Transport des Schubgliedes 21 treten die Keilflächen 23 und 25 in getriebliche Verbindung, wodurch der Schieber 20 bei stillstehendem Schlitten 13 bis zum Kippunkt des Kippsprungwerkes verschoben wird. Nachfolgend führen eine Komponente der Druckfeder 45 und die Zugfeder 42 den Schieber 20 an einen Anschlag 47, wobei die Kulisse 43 derart gestaltet ist, daß die Finger 37, 38 und die Freisparungen 34, 35 in Eingriff bleiben. Zweckmäßigerweise wird das Schubglied 21, wie in Figur 3 dargestellt, zur Betätigung eines Schalters für die Drehrichtungsumsteuerung des treibenden Motors mit einem Überhub bewegt, um danach in eine Ausgangsstellung, die eine erneute Eingabe einer Datenkarte 14 und ein Verschieben des Schlittens 13 in die Lese-/Schreibposition gestattet, zurückgefahren zu werden.

## Patentansprüche

1. Schubgetriebe mit einem ersten, mit einem Motor in getrieblicher Verbindung stehenden Schubglied (1) und einem zweiten Schubglied (2), an welchem eine variable Last angreift und welches mit dem ersten Schubglied (1) in keilgetrieblicher Verbindung steht, wobei die keilgetriebliche Verbindung derart ausgebildet ist, dass in Bezug auf die variable Last der Motor mit einem nichtproportionalen Drehmoment beaufschlagt ist, **dadurch gekennzeich- net, dass** die Schubglieder (1, 2) als flache, plattenförmige Bauteile ausgebildet sind und dass jeweils eine der die Schubglieder (1, 2) rechtwinklig begrenzenden Stirnflächen gekrümmt angeformt ist, dass das treibende Schubglied (21) in Schubrichtung gestuft ausgebildet ist, dass die Stirnfläche der Stufe als zusätzliche Keilfläche (23) ausgeformt ist und dass wenigstens zwei getrennt gelagerte, getriebene Schubglieder (13, 20) vorgesehen sind.

2. Schubgetriebe nach Anspruch 1, **dadurch ge- kennzeichnet, dass** die getrieblich zusammenwirkenden Keilflächen (3 und 4) der Schubglieder (1 und 2) in Schubrichtung gekrümmt ausgebildet sind.

3. Schubgetriebe nach Anspruch 1, **dadurch ge- kennzeichnet, dass** die Keilflächen (3, 4) der Schubglieder (1, 2) zylindrisch ausgebildet sind.

4. Schubgetriebe nach Anspruch 1, **dadurch ge- kennzeichnet, dass** der Keilfläche (3) des treibenden Schubgliedes (1) ein an dem getriebenen Schubglied (2) vorgesehener, vorzugsweise zylindrischer Stift zugeordnet ist.

5. Schubgetriebe nach Anspruch 1, **dadurch ge- kennzeichnet, dass** eines der getriebenen Schubglieder (13, 20) als ein für die Aufnahme von Datenkarten (14) ausgebildeter Schlitten (13) gestaltet ist und dass das andere getriebene Schubglied in Form eines flachen Schiebers (20) ausgebildet und auf dem Schlitten (13) verschiebbar gelagert ist.

## Claims

1. Sliding gear, with a first sliding member (1) connected to a motor with the effect of transmission, with a second sliding member (2) on which a variable load acts and which is connected to the first sliding member (1) with the effect of wedge-inducted transmission, the wedge-induced transmission connection being designed in such a way that the motor is acted upon by a non-proportional torque with respect to the variable load, **characterized in that** the sliding members (1, 2) are designed as flat plate-shaped components, and **in that** in each case one of the end faces delimiting the sliding members (1, 2) at right angles is integrally formed in a curved manner, **in that** the driving sliding member (21) is designed so as to be stepped in the sliding direction, **in that** the end face of the step is shaped as an additional wedge face (23), and **in that** at least two separately mounted driven sliding members (13, 20) are provided.

2. Sliding gear according to Claim 1, **characterized in that** the wedge faces (3 and 4) of the sliding members (1 and 2), said wedge faces cooperating with the effect of transmission, are designed so as to be curved in a sliding direction.

3. Sliding gear according to Claim 1, **characterized in that** the wedge faces (3, 4) of the sliding members (1, 2) are designed cylindrically.

4. Sliding gear according to Claim 1, **characterized in that** the wedge face (3) of the driving sliding member (1) is assigned a preferably cylindrical pin provided on the driven sliding member (2).

5. Sliding gear according to Claim 1, **characterized in that** one of the driven sliding members (13, 20) is configured as a carriage (13) designed for reception of data cards (14), and **in that** the other driven sliding member is designed in the form of a flat slide (20) and is mounted displaceably on the carriage (13).

## Revendications

1. Système de transmission à coulisse comportant une première pièce coulissante (1) en pnse de transmission avec un moteur et une deuxième pièce coulissante (2) attaquée par une charge variable et qui est en prise de transmission non linéaire avec la première pièce coulissante (1), où la prise de transmission non linéaire est conçue de telle sorte que le moteur est soumis, par rapport à la charge variable, a un couple moteur non proportionnel, **carac- térisé par le fait que** les pièces coulissantes (1, 2) sont conçues comme pièces plates en forme de plaques et que, dans chaque cas, l'une des surfaces frontales limitant à angle droit les pièces coulissantes (1, 2) a une forme incurvée, que la pièce coulissante entraînante (21) a une configuration échelonnée dans le sens de coulissement, que les surfaces frontales de l'échelon sont façonnées en tant que surfaces supplémentaires d'attaque (23) et qu'il est prévu au moins deux pièces coulissantes (13, 20) montées et entraînées séparément.

2. Système de transmission à coulisse selon la revendication 1 **caractérisé par le fait que** les surfaces d'attaque (3 et 4), agissant en prise de transmission, des pièces coulissantes (1 et 2) ont une forme incurvée dans le sens de la transmission.

3. Système de transmission à coulisse selon la revendication 1 **caractérisé par le fait que** les surfaces d'attaque (3 et 4) des pièces coulissantes (1 et 2) ont une forme cylindrique.

4. Système de transmission à coulisse selon la revendication 1 **caractérisé par le fait qu'**une broche, préférentiellement cylindrique, prévue sur la pièce coulissante entraînée (2), correspond à la surface d'attaque (3) de la pièce coulissante entraînante (1).

5. Système de transmission à coulisse selon la revendication 1 **caractérisé par le fait que** l'une des pièces entraînées (13, 20) est conçue comme chariot (13) prévu pour recevoir des cartes à stockage de données (14) et que l'autre pièce coulissante entraînée a la forme d'un coulisseau plat (20) et est montée sur le chariot (13) de telle sorte qu'elle peut coulisser.
